# EUROPÄISCHE PATENTSCHRIFT

(11) **EP 1 982 809 B1**
(45) Veröffentlichungstag und Bekanntmachung des Hinweises auf die Patenterteilung: **25.12.2013**
(21) Anmeldenummer: 08154149.2
(22) Anmeldetag: 07.04.2008
(51) Int. Cl.: B27K 3/34, C09K 21/12

(54) **Flammwidrige Holzwerkstoffe**
Flame resistant wooden materials
Matières premières en bois non inflammables

(30) Priorität: 12.04.2007 DE 102007017180
(43) Veröffentlichungstag der Anmeldung: 22.10.2008
(73) Patentinhaber: LANXESS Deutschland GmbH, 50569 Köln (DE)
(72) Erfinder: HANSEL, Jan-Gerd, 51469 Bergisch Gladbach (DE); MAUERER, Otto, 42799 Leichlingen (DE); GÄRTNER, Maria, 51429 Bergisch Gladbach (DE)

(56) Entgegenhaltungen:
- EP-A- 0 037 949
- WO-A-00/58725
- US-A- 3 886 205
- US-A- 4 252 857
- US-A- 5 000 856
- US-A- 5 004 549

## Beschreibung

Die vorliegende Erfindung betrifft mit Salzen halogenfreier organischer Phosphorverbindungen flammwidrig ausgerüstete Holzwerkstoffe, Verfahren zu ihrer Herstellung sowie ihre Verwendung.

Holz und Holzwerkstoffe müssen wie auch andere Baustoffe, Bauteile und Materialien umfangreichen Anforderungen in Bezug auf den Flammschutz gerecht werden. So können z. B. Baustoffe gemäß DIN 4102, Bauteile für Elektrogeräte gemäß UL 94 oder IEC-60695-2, Bauteile für Schienenfahrzeuge gemäß DIN 5510 und Möbel gemäß BS 5852 klassifiziert und für ihre Anwendung entsprechend flammwidrig ausgerüstet werden. Besondere Anforderungen werden z. B. an Holzwerkstoffe zur Ausrüstung von Luftfahrzeugen (z. B. FAR 25.853) oder Schiffen (z. B. IMO A.652(16)) gestellt. Eine Übersicht über zahlreiche Prüfungen und Anforderungen gibt z. B. Jürgen Troitzsch, "Plastics Flammability Handbook", 2004, Carl Hanser Verlag, München.

Zusätzlich steigen die Anforderungen an den Brandschutz mehr und mehr. So stellen z. B. neue europäische Normen, die die bisherigen nationalen Prüfnormen ablösen sollen, deutlich höhere Anforderungen an den Brandschutz. Der SBI-Test (EN 13823) verlangt beispielsweise nicht nur eine Berücksichtigung des Brandverhaltens, sondern auch der Rauchgasdichte. Die neue, für Schienenfahrzeuge vorgesehene Norm (prEN 45545) berücksichtigt beispielsweise Rauchgasdichte und Rauchgastoxizität. Anforderungen an die Rauchgastoxizität, die vielfach über die Messung unter anderem der Halogenwasserstoffkonzentrationen im Rauchgas bestimmt wird, können z. B. den Einsatz bewährter halogenhaltiger Flammschutzmittel unmöglich machen. Daneben werden halogenfreie Flammschutzmittel auch bevorzugt, weil ihnen in Hinblick auf Produktsicherheit und Umweltschutz durch die Öffentlichkeit mehr Vertrauen entgegengebracht wird. Das heißt, für viele Anwendungsgebiete von Holzwerkstoffen muss eine bewährte und funktionierende Flammschutzausrüstung hinsichtlich neuer Anforderungen überarbeitet werden.

Die Flammschutzausrüstung von Holzwerkstoffen durch Behandlung mit Chemikalien ist bekannt. Die wichtigsten Behandlungsmethoden sind die Kesseldruckimprägnierung und die Beschichtung. Eine flammwidrige Beschichtung von Holz hat den erheblichen Nachteil, dass das natürliche Material Holz im Baubereich oder als Möbelwerkstoff sein typisches natürliches Aussehen verliert. Selbst wenn die Beschichtung durchsichtig ist, werden das Erscheinungsbild der Holzoberfläche und die Weiterverarbeitungsmöglichkeiten beeinträchtig, was unerwünscht sein kann. Häufiger wird daher die Kesseldruckimprägnierung angewendet, bei der das Holz mit einer meist wässrigen Lösung eines Flammschutzmittels in Kontakt gebracht wird, durch geeignete Maßnahmen die Aufnahme einer ausreichenden Menge Flammschutzmittel in das Volumen des Holzes erreicht wird und schließlich getrocknet wird. Als Flammschutzmittel werden überwiegend phosphor-, stickstoff- und borhaltige Substanzen eingesetzt. Beispiele hierfür sind Ammoniumphosphat, Harnstoff oder Natriumtetraborat.

Die flammwidrige Ausrüstung von Holz durch Kesseldruckimprägnierung mit salzartigen Flammschutzmitteln ist technisch etabliert und kostengünstig, hat aber eine Reihe von Nachteilen. Bei direkter Wassereinwirkung, z. B. an der Außenhaut von Gebäuden, werden die Flammschutzmittel herausgelöst und die Flammwidrigkeit lässt nach. Aus diesem Grund werden insbesondere für Außenanwendungen Flammschutzmittel eingesetzt, die im Holz fixiert sind und nicht durch Wasser ausgelaugt werden können. Beispiele hierfür sind Kombinationen aus Flammschutzmitteln mit einem Harz, das nach der Imprägnierung im Holz auspolymerisiert wird und das Flammschutzmittel dabei bindet, wie in US 3,968,276 beschrieben. Alternativ können, wie aus US 3,558,596 bekannt ist, reaktive Flammschutzmittel in das Holz eingebracht werden, die durch Reaktion mit dem Holz fixiert werden.

Doch auch wenn kein direkter Wasserkontakt zu befürchten ist, z. B. im Gebäudeinnenbereich, ist bei der Anwendung herkömmlicher Flammschutzmittel damit zu rechnen, dass der Gleichgewichts-Feuchtigkeitsgehalt erhöht wird. Daraus können eine schlechtere Dimensionsstabilität der Holzbauteile, Korrosion an Nägeln, Schrauben und Beschlägen sowie eine höhere Anfälligkeit gegenüber mikrobiellem Angriff resultieren. So ist aus Fire and Materials 2001, 25, 95 - 104 bekannt, dass Flammschutzmittel auf Basis von Ammoniumphosphat oder Harnstoff aufgrund ihrer Nährstoffwirkung einen Befall mit holzzersetzenden Schimmelpilzen fördern können.

Weiterhin kann eine flammwidrige Ausrüstung des Holzes Nachteile in der Haltbarkeit, Leimhaftung und Lackierbarkeit des Holzes mit sich bringen. Beispielsweise können reaktive Klebe- oder Lacksysteme auf Basis von Polyurethanen nicht oder nur unzureichend ausreagieren, wenn der pH-Wert des Substrates durch das Flammschutzmittel verändert wurde. Ebenso kann sich die mechanische Stabilität durch eine flammwidrige Ausrüstung verschlechtern.

Um hohen Brandschutzforderungen bei niedriger Einsatzmenge gerecht zu werden, wurden halogenhaltige Flammschutzmittel für Holz vorgeschlagen, z. B. Halogenphosphonate in US 2,725,311 und Halogenphosphite und Halogenphosphate in US 3,285,774. Der Halogengehalt bringt eine gute Wirksamkeit mit sich. Nachteilig an diesen Substanzen sind die hohen Rauchgasdichten und Rauchgastoxizitäten im Brandfall. Darüber hinaus werden halogenhaltige Flammschutzmittel den Anforderungen der Gesellschaft an Produktsicherheit und Umweltschutz nicht mehr gerecht. Flammschutzmittel auf Basis von Ammoniumsalzen der Phosphorsäure oder Polyphosphorsäuren werden häufig zur flammwidrigen Ausrüstung von Holz eingesetzt. Sie haben den Nachteil, dass ihre Flammschutzwirkung gering ist und sie daher mit weiteren Stoffen, z. B. mit Borverbindungen, kombiniert werden müssen, um die Wirkung zu verbessern.

Im SP REPORT 2006:30 (Swedish National Testing and Research Institute) wird die Verwendung von Phosphonsäuren als Flammschutzmittel ohne Angabe von experimentellen Details beschrieben. In eigenen Versuchen hierzu zeigten sich jedoch gravierende Mängel dieser Flammschutzmittel (siehe Vergleichsbeispiel V 2)

Aus US-A4252857 sind Flammschutzmittel für brandgefährdete Objekte, wie z. B. Stahlkonstruktionen, Holz oder organische Formkörper bekannt, die Metallsalze von einer oder mehreren Phosphonocarbonsäuren und/ oder Phosphonsäuren enthalten. Die aus US-A4252857 bekannten Flammschutzmittet werden in Form von Schäumen oder Coatings appliziert und sind daher auf bestimmte Anwendungen begrenzt.

Die strengen und zunehmenden normativen Anforderungen, die sich wandelnde Akzeptanz bestimmter Chemikalien durch die Öffentlichkeit und die beschriebenen Nachteile der bekannten Flammschutzausrüstungen für Holzwerkstoffe führen zu einem Bedarf an neuen Lösungen zur Herstellung von flammwidrigen Holzwerkstoffen. Die Aufgabe der vorliegenden Erfindung bestand darin, Verfahren zur Herstellung von flammwidrigen Holzwerkstoffen zu finden, welche auf Basis von gut in technischem Maßstab verfügbaren Stoffen in einer einstufigen Behandlung eine hohe Wirksamkeit zeigen. Die gesuchten Mittel sollten frei von halogenhaltigen Stoffen, frei von anorganischen Phosphaten und weiteren Co-Flammschutzmitteln oder Hilfsstoffen, nicht flüchtig und gut wasserlöslich sein. Die Eigenschaften des Holzes, insbesondere seine mechanische Stabilität, sollten nicht beeinträchtigt werden.

Überraschend hat sich gezeigt, dass bestimmte Salze von halogenfreien organischen Phosphonsäuren in einfacher Weise die Herstellung von flammwidrigen Holzwerkstoffen erlauben, die alle Anforderungen erfüllen. Gegenstand dieser Erfindung sind flammwidrige Holzwerkstoffe enthaltend als wasserlösliche Flammschutzmittel Salze von halogenfreien organischen Phosphonsäuren dadurch gekennzeichnet, dass es sich bei den Salzen um solche der Formel (I) 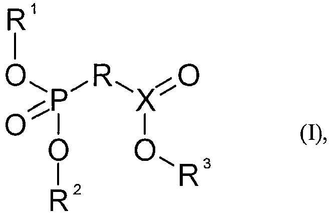 worin
- R: für einen optional bis zu drei Stickstoffatome enthaltenden, optional mit bis zu vier Hydroxylgruppen substituierten, zweibindigen, geradkettigen, verzweigten oder cyclischen C₁- bis C₁₀-Kohlenwasserstoffrest steht,
- R¹, R² und R³: unabhängig voneinander für H oder NR⁴R⁵R⁶R⁷ stehen, wobei mindestens einer der Reste R¹, R² und R³ ungleich H ist,
- X: für C, S=O, oder P-O-R¹ steht und
- R⁴, R⁵, R⁶ und R⁷: unabhängig voneinander für H, geradkettiges oder verzweigtes C₁- bis C₁₈-Alkyl, C₂- bis C₄-Hydroxyalkyl oder Benzyl stehen,
handelt

Als Holzwerkstoffe werden in Zusammenhang mit der vorliegenden Erfindung aus massivem Holz bestehende Zuschnitte, wie beispielsweise entrindete Stämme, Bretter, Balken, Leisten, Platten, Schichten, Furniere, Pfosten oder Stäbe, weiterhin Holzpartikel, wie beispielsweise Späne, Häcksel, Holzwolle, Sägemehl oder Holzfasern, und schließlich aus Holzzuschnitten oder Holzpartikeln hergestellte Materialien oder Halbzeuge, wie beispielsweise Sperrholz, Schichtholz, Laminate, Spanplatten und Holzfaserplatten, verstanden.

Für die Herstellung der erfindungsgemäßen Holzwerkstoffe wird bevorzugt Laub- oder Nadelholz eingesetzt werden. Besonders bevorzugt sind insbesondere die Holzarten Abachi, Ahorn, Birke, Birne, Bubinga, Buche, Douglasie, Ebenholz, Eibe, Eiche, Esche, Erle, Eucalyptus, Fichte, Gabun, Kastanie, Kiefer, Kirsche, Lärche, Linde, Mahagoni, Merbau, Meranti, Nussbaum, Palisander, Pappel, Platane, Robinie, Tanne, Teak, Ulme, Weide, Wenge und Zeder sowie die jeweiligen Unterarten und lokalen Varietäten. Ebenfalls besonders bevorzugt sind auch holzige und faserige Bestandteile anderer Pflanzen, wie beispielsweise Bambus, Sisal und Hanf.

In einer bevorzugten Ausführungsform der Erfindung enthält der Holzwerkstoff als Flammschutzmittel mindestens ein NH₄-Salz der Hydroxyphosphonoessigsäure (CAS-Reg.-No. 23783-26-8), der Hydroxyethandiphosphonsäure (CAS-Reg.-No. 2809-21-4), der 2-Phosphonobutan-1,2,4-tricarbonsäure (CAS-Reg.-No.37971-36-1), der Nitrilotrismethylentris(phosphonsäure) (CAS-Reg.-No. 6419-19-8) oder der Diethylentriamin-pentakis(methylenphosphonsäure) (CAS-Reg.-No. 15827-60-8).

Die erfindungsgemäßen Holzwerkstoffe können auch eine beliebige Mischung der genannten Salze enthalten, wobei die Mischung verschiedene Salze desselben Kations mit derselben Phosphonsäure, verschiedene Salze desselben Kations mit unterschiedlichen Phosphonsäuren, verschiedene Salze unterschiedlicher Kationen mit derselben Phosphonsäure oder verschiedene Salze unterschiedlicher Kationen mit unterschiedlichen Phosphonsäuren enthalten kann. Die Flammschutzmittel können nach bekannten Methoden hergestellt werden wie beispielsweise in US 3 886 205 beschrieben. In vielen Fällen sind sie kommerziell erhältlich. Die erfindungsgemäßen Holzwerkstoffe können neben den Salzen von halogenfreien organischen Phosphonsäuren der Formel (I) weitere für diesen Zweck übliche Flammschutzmittel enthalten. Geeignet sind hierfür Salze der Phosphorsäure mit stickstoffhaltigen Kationen, z. B. Ammoniumphosphat, Salze der Di- oder Polyphosphorsäure mit stickstoffhaltigen Kationen, z. B. Ammoniumpolyphosphat, hydroxyfunktionelle Ester organischer Phosphonsäuren, z. B. 3-(Dimethylphosphono)-N-(hydroxymethyl) propionamid, Borverbindungen, z. B. Natriumtetraborat, Stickstoffverbindungen, z. B. Harnstoff, Melamin und Guanidinderivate oder Siliziumverbindungen, z. B. Silicone.

Die erfindungsgemäßen Holzwerkstoffe werden hergestellt, indem optional vorbehandeltes Holz in Form von Zuschnitten, Holzpartikeln oder Holzhalbzeugen mit den genannten Salzen von halogenfreien organischen Phosphonsäuren in an sich bekannter Weise behandelt werden.

In einer bevorzugten Ausführungsform der Erfindung handelt es sich bei den erfindungsgemäß einzusetzenden Flammschutzmitteln um Lösungen oder Dispersionen der genannten Salze von halogenfreien organischen Phosphonsäuren in Wasser oder wasserhaltigen Lösungsmitteln. Die Lösungen oder Dispersionen enthalten die Salze in Konzentrationen von 0,1 bis 80 Gew.-%, bezogen auf die Lösung, bevorzugt von 1 bis 40 Gew.-%. Die Lösungen oder Dispersionen haben einen pH-Wert von 1 bis 12, bevorzugt von 2 bis 10. Die Lösungen oder Dispersionen können weitere Zusätze enthalten, wie beispielsweise Mittel zur Einstellung oder Regulierung des pH-Werts, antimikrobielle Holzschutzmittel, Benetzungshilfsmittel oder Dispergiermittel.

Gegenstand der Erfindung ist auch ein Verfahren zur flammwidrigen Ausrüstung von Holzwerkstoffen, dadurch gekennzeichnet, dass Holzzuschnitte, Holzpartikel oder Holzhalbzeuge mit Salzen von halogenfreien organischen Phosphonsäuren entsprechend der Formel (I) behandelt werden. In einer bevorzugten Ausführungsform der Erfindung werden bei der Behandlung die oben beschriebenen Lösungen oder Dispersionen der genannten Salze von halogenfreien organischen Phosphonsäuren in Wasser oder wasserhaltigen Lösungsmitteln durch Sprühen, Streichen, Tauchen oder Kesseldruckimprägnierung, oder durch Kombinationen solcher Verfahren, in den Holzwerkstoff eingebracht. Besonders bevorzugt wird die Behandlung als Kesseldruckimprägnierung durchgeführt.

Die Behandlung kann drucklos, bei Unterdruck bis zu 0,001 bar oder bei Überdruck bis zu 50 bar durchgeführt werden. Sie wird bevorzugt bei Temperaturen von 0 bis 150 °C durchgeführt. Die bekannten Varianten der Imprägnierung, namentlich das Kesseldruckverfahren, das Niederdruckverfahren, das Diffusionsverfahren oder die Trogtränkung können angewendet werden. Die Imprägnierung kann eine anschließende Trocknung des Holzwerkstoffs beinhalten.

Die im erfindungsgemäßen Verfahren eingesetzten Holzzuschnitte, Holzpartikel oder Holzhalbzeuge können saftfrisch oder vorgetrocknet behandelt werden. Sie können in verschiedener Weise vorbehandelt sein, beispielsweise durch Darren, Beizen, Bleichen, Auswaschen von Holzbestandteilen oder antimikrobielle Behandlung.

Die erfindungsgemäß behandelten Holzzuschnitte, Holzpartikel oder Holzhalbzeuge können in anschließenden Bearbeitungsschritten weiter modifiziert werden, um Gebrauchseigenschaften wie Unempfindlichkeit gegen Wasser, Wetter und UV-Strahlen, Resistenz gegen Mikroben und Insekten, Flammwidrigkeit, Dimensionsstabilität oder mechanische Stabilität zu verbessern. Für diese Zwecke können sie nach an sich bekannten Methoden beölt, lackiert, beschichtet, thermisch behandelt, acetyliert, silanisiert oder furfuryliert werden.

Die erfindungsgemäßen beziehungsweise durch das erfindungsgemäße Verfahren hergestellten Holzwerkstoffe unterscheiden sich in Aussehen und Eigenschaften nicht von unbehandelten Holzwerkstoffen und lassen sich sehr gut weiter verarbeiten. Durch die bei der Behandlung eingesetzten Salze halogenfreier organischer Phosphonsäuren wird eine hohe Flammwidrigkeit erreicht.

Die Erfindung betrifft schließlich auch die Verwendung der beschriebenen Holzwerkstoffe als Bauholz besonders im Innenbereich, z. B. im Dachstuhl, in Decken- und Wandkonstruktionen, als Material zur Herstellung von Inneneinrichtungen, z. B. als Decken- oder Wandverkleidung oder Fußbodenbelag, als Material zur Herstellung von Möbeln, Einbauschränken, Messeständen und Ladeneinrichtungen sowie als Material zur dekorativen Innenausstattung von Transportmitteln, z. B. Automobilen, Eisenbahnwaggons, Flugzeugen und Schiffen, als Ausgangsmaterial für weiter veredelte Holzhalbzeuge, z. B. Spanplatten und Holzfaserplatten oder als Füllstoff oder Verstärkungsmaterial in holzhaltigen Kompositmaterialien, bevorzugt Holz-Kunststoff-Komposite oder mineralisch gebundene Baumaterialien.

Anhand der nachfolgenden Beispiele wird die Erfindung näher erläutert, ohne dass dadurch eine Einschränkung der Erfindung bewirkt werden soll. Die Prozente bedeuten Gewichtsprozente.

Die in den erfindungsgemäßen Beispielen B2 bis B7 sowie im Vergleichsbeispiel V2 eingesetzten Flammschutzmittel wurde nach der Vorschrift aus Beispiel 1 in US 3 886 205 hergestellt.

### Beispiele

### A. Flammwidrigkeit und mechanische Stabilität

**Tabelle 1 Verwendete Flammschutzmittel.**

| **Beispiel** | Flammschutzmittel | Konzentration [%] der wässerigen Lösung |
|---|---|---|
| **V 1** | kein | 0 |
| **V 2** | 2-Phosphonobutan-1,2,4-tricarbonsäure | 25 |
| **B 2** | 2-Phosphonobutan-1,2,4-tricarbonsäure-diammoniumsalz | 25 |
| **B 3** | 2-Phosphonobutan-1,2,4-tricarbonsäure-triammoniumsalz | 25 |

### Herstellung der Prüfkörper

Für die Brandprüfung wurden Prüfkörper aus Fichtenholz (125 mm × 30 mm × 5 mm) eingesetzt, die aus handelsüblichen Latten durch Absägen hergestellt wurden. Die Prüfkörper wurden vor der Behandlung mit den Flammschutzmitteln 2 Tage bei 23 °C und 50 % Luftfeuchtigkeit klimatisiert. Anschließend wurde ihre Masse m₁ ausgewogen. Dann wurden sie in eine wässerige Lösung der in Tabelle 1 nach Art und Konzentration angegebenen Flammschutzmittel gelegt. Das Tauchbad wurde in einer Vakuumkammer auf einen Druck von 50 mbar evakuiert und bei 23 °C für 10 min dort belassen. Schließlich wurde belüftet, die Prüfkörper wurden nach 10 min aus dem Tauchbad genommen, gründlich trockengetupft, 2 h bei 60 °C getrocknet und anschließend 2 Tage bei 23 °C und 50 % Luftfeuchtigkeit klimatisiert und ihre Masse m₂ ausgewogen. Der in Tabelle 2 angegebene Flammschutzmittelgehalt in % entspricht (m₂-m₁)/m₂ × 100.

Zum Vergleich wurden entsprechende Prüfkörper in gleicher Weise behandelt. Allerdings wurde anstelle einer Flammschutzmittellösung nur vollentsalztes Wasser eingesetzt (Vergleichsbeispiel V 1).

Die Prüfkörper der erfindungsgemäßen Behandlung und der Vergleichsbehandlung waren hinsichtlich Aussehen, Griff und Geruch nicht zu unterscheiden.

### Bestimmung der Flammwidrigkeit

Die Brandprüfung der Prüfkörper wurde in einem Kleinbrennertest durchgeführt. Dazu wurden die Prüfkörper vertikal eingespannt und an der Unterkante für 20 s mit einer 2 cm langen Zündflamme im Winkel von 45° beflammt. Nach dem Entfernen der Zündflamme wurde beurteilt, ob die Probe von selbst verlöscht oder weiterbrennt. Nach dem Verlöschen wurden die Prüfkörper noch einmal 20 s mit einer 2 cm langen Zündflamme beflammt. Nach dem zweiten Entfernen der Zündflamme wurde wieder beurteilt, ob die Probe von selbst verlöscht oder weiterbrennt oder ein Nachglühen auftritt. Die Ergebnisse sind in Tabelle 2 aufgelistet.

### Bestimmung der Zugfestigkeit

Auf einem wie oben beschrieben mit Flammschutzmittel behandelten Prüfkörper aus Buchenholz (125 mm × 30 mm × 5 mm) wurden mit Filzstift beidseitig der Sollbruchstelle zwei Markierungen im Abstand von 20 mm angebracht. Dann wurde der Prüfkörper in die Haltebacken einer Zerreißmaschine (Fabrikat Lloyd) eingespannt und der Laserstrahl eines Laserdehnungsnehmers (Fabrikat Ametek) auf die Markierungen justiert (Nullwert). Nun wurde die Probe mit einer Abzuggeschwindigkeit von 20 mm/min zerrissen und dabei die Spannung in Abhängigkeit von der Dehnung der Probe elektronisch protokolliert. Der Höchstwert der Spannung in der Spannungs-DehnungsKurve entspricht der Zugfestigkeit. Der Versuch wurde für 10 Prüfkörper pro Flammschutzmittel und zum Vergleich für 10 unbehandelte Prüfkörper wiederholt und der Mittelwert der dabei bestimnten Zugfestigkeiten in Tabelle 2 wiedergegeben.

**Tabelle 2 Ergebnisse zu den Vergleichsbeispielen V1 und V2 und den erfindungsgemäßen Beispielen B2 und B3.**

| **Beispiel** | **V 1** | **V 2** | **B 2** | **B 3** |
|---|---|---|---|---|
| Flammschutzmittelgehalt [%] | 0 | 8 | 12 | 10 |
| Selbstverlöschend nach 1. Beflammung | nein | ja | ja | ja |
| Selbstverlöschend nach 2. Beflammung | nein | ja | ja | ja |
| Nachglühen | - | nein | nein | nein |
| Zugfestigkeit [N/mm²] | 129 | 61 | 133 | - |

### Auswertung

Die erfindungsgemäß behandelten Prüfkörper verlöschen nach Beflammung von selbst, während der Prüfkörper aus Vergleichsbeispiel V 1 ohne Flammschutzmittel vollständig abbrennt. Die Behandlung im nicht erfindungsgemäßen Vergleichsbeispiel V 2 führt zwar auch zu einem selbstverlöschenden Verhalten. Die Zugfestigkeit des Prüfkörpers aus Vergleichsbeispiel V 2 liegt jedoch ganz deutlich unter der Zugfestigkeit von unbehandeltem Holz. Überraschender Weise unterschiedet sich die Zugfestigkeit von Prüfkörpern, die mit den erfindungsgemäßen Flammschutzmittel behandelt wurden, kaum von der Zugfestigkeit von unbehandeltem Holz. Damit wird deutlich, dass die erfindungsgemäße Behandlung mit Salzen halogenfreier organischer Phosphonsäuren zu flammwidrigem Holzwerkstoffen führt, die in ihrer mechanischen Stabilität keine Einbußen gegenüber unbehandeltem Holz aufweisen. Die entsprechende Behandlung mit den Phosphonsäuren selber führt hingegen zu deutlich verschlechterter mechanischer Stabilität.

### B. Quantitativer Vergleich mit herkömmlichem Flammschutzmittel

**Tabelle 3 Verwendete Flammschutzmittel.**

| **Beispiel** | Flammschutzmittel |
|---|---|
| **V 3** | kein |
| **V 4** | VP 11647, Fa. IGP Flammschutzmittel, Dülmen (Flammschutzmittel für Holz auf Basis eines anorganischen Phosphats) |
| **B 4** | 2-Phosphonobutan-1,2,4-tricarbonsäure-monoammoniumsalz |
| **B 5** | 2-Phosphonobutan-1,2,4-tricarbonsäure-diammoniumsalz |
| **B 6** | 2-Phosphonobutan-1,2,4-tricarbonsäure-triammoniumsalz |
| **B 7** | 2-Phosphonobutan-1,2,4-tricarbonsäure-tetraammoniumsalz |

### Thermogravimetrie(TGA)

90 Teile Buchenholzmehl und 10 Teile eines der in Tabelle 3 angegebenen Flammschutzmittel wurden innig miteinander vermischt. Eine bekannte Ausgangsmenge dieser Mischung wurde in einem offenen Tiegel an der Luft mit einer Heizrate von 10 °C/min bis auf 500 °C aufgeheizt und die Massenveränderung des Tiegels dabei elektronisch protokolliert. Die anderen Flammschutzmittel sowie zum Vergleich eine Probe aus reinem Buchenholzmehl wurden in der gleichen Art untersucht. In Tabelle 4 ist der nach Erreichen von 500 °C verbleibende Massenanteil in Relation zur Ausgangsmenge wiedergegeben.

### Zweistufige isotherme Verkohlung

90 Teile Buchenholzmehl und 10 Teile eines der in Tabelle 3 angegebenen Flammschutzmittel wurden innig miteinander vermischt. Eine bekannte Ausgangsmenge dieser Mischung wurde an der Luft 2 h bei 300 °C und dann 2 h bei 350 °C gelagert, dann abgekühlt und gewogen. Die anderen Flammschutzmittel sowie zum Vergleich eine Probe aus reinem Buchenholzmehl wurden in der gleichen Art untersucht. In Tabelle 4 ist der verbleibende Massenanteil in Relation zur Ausgangsmenge wiedergegeben.

**Tabelle 4 Ergebnisse zu den Vergleichsbeispielen V3 und V4 und den erfindungsgemäßen Beispielen B4 bis B7.**

| **Beispiel** | TGA-Rückstand bei 500 °C [%] | Kohlebildung nach Thermolagerung [%] |
|---|---|---|
| **V 3** | 2 | 7 |
| **V 4** | 10 | 18 |
| **B 4** | 38 | 27 |
| **B 5** | 34 | 23 |
| **B 6** | 34 | 23 |
| **B 7** | 34 | 26 |

### Auswertung

Ausreichende Kohlebildung unter thermischer Belastung schirmt den Brennstoff von der Hitzequelle und von der Sauerstoffversorgung ab und führt daher zu verschlechterten Brandeigenschaften und schließlich zum Verlöschen der Flamme. Die Messung der Kohlebildung ist daher eine Möglichkeit, die Wirksamkeit verschiedener Flammschutzmittel quantitativ zu vergleichen.

Sowohl in der dynamischen Verkohlung in der TGA als auch in der zweistufigen isothermen Verkohlung zeigt sich, dass die erfindungsgemäßen Flammschutzmittel der Beispiele B 4 bis B 7 wesentlich mehr Kohle bilden als das herkömmliche Flammschutzmittel auf Phosphatbasis im Vergleichsbeispiel V 4. Das unbehandelte Holz im Vergleichsbeispiel V 3 bildet fast überhaupt keine Kohle. Damit wird deutlich, dass die erfindungsgemäße Behandlung von Holzwerkstoffen zu gegenüber dem Stand der Technik verbesserter Flammwidrigkeit führt.

## Patentansprüche

1. Flammwidrige Holzwerkstoffe enthaltend als wasserlösliche Flammschutzmittel Salze halogenfreier organischer Phosponsäuren, **dadurch gekennzeichnet, dass** es sich bei den Salzen um solche der Formel (I) 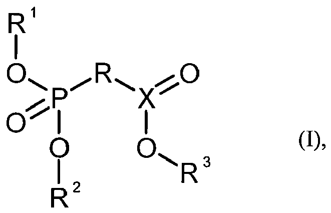 worin
R für einen optional bis zu drei Stickstoffatome enthaltenden, optional mit bis zu vier Hydroxylgruppen substituierten, zweibindigen, geradkettigen, verzweigten oder cyclischen C₁- bis C₁₀-Kohlenwasserstoffrest steht,
R¹, R² und R³ unabhängig voneinander für H oder NR⁴R⁵R⁶R⁷ stehen, wobei mindestens einer der Reste R¹, R² und R³ ungleich H ist,
X für C, S=O, oder P-O-R¹ steht und
R⁴, R⁵, R⁶ und R⁷ unabhängig voneinander für H, geradkettiges oder verzweigtes C₁- bis C₁₈-Alkyl, C₂- bis C₄-Hydroxyalkyl oder Benzyl stehen
handelt.

2. Holzwerkstoffe nach Anspruch 1, **dadurch gekennzeichnet, dass** sie als Salze halogenfreier organischer Phosponsäuren mindestens ein NH₄-Salz der Hydroxyphosphonoessigsäure, der Hydroxyethandiphosphonsäure, der 2-Phosphonobutan-1,2,4-tricarbonsäure, der Nitrilotrismethylentris(phosphonsäure) oder der Diethylentriamin-pentakis(methylenphosphonsäure) enthalten.

3. Verfahren zur flammwidrigen Ausrüstung von Holzwerkstoffen durch Behandeln von Holzzuschnitten, Holzpartikeln oder Holzhalbzeugen mit Salzen halogenfreier organischer Phosponsäuren als wasserlösliche Flammschutzmittel, **dadurch gekennzeichnet, dass** die Salze der Formel (I) 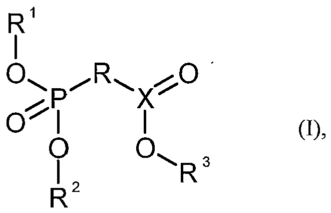 worin
R für einen optional bis zu drei Stickstoffatome enthaltenden, optional mit bis zu vier Hydroxylgruppen substituierten, zweibindigen, geradkettigen, verzweigten oder cyclischen C₁- bis C₁₀-Kohlenwasserstoffirest steht,
R¹, R² und R³ unabhängig voneinander für H oder NR⁴R⁵R⁶R⁷ stehen, wobei mindestens einer der Reste R¹, R² und R³ ungleich H ist,
X für C, S=O, oder P-O-R¹ steht und
R⁴, R⁵, R⁶ und R⁷ unabhängig voneinander für H, geradkettiges oder verzweigtes C₁- bis C₁₈-Alkyl, C₂- bis C₄-Hydroxyalkyl oder Benzyl stehen,
entsprechen.

4. Verfahren nach Anspruch 6, **dadurch gekennzeichnet, dass** bei der Behandlung mindestens ein wasserlösliches NH₁₄-Salz der Hydroxyphosphonoessigsäure, der Hydroxyethandiphosphonsäure, der 2-Phosphonobutan-1,2,4-tricarbonsäure, der Nitrilotrismethylentris-(phosphonsäure) oder der Diethylentriamin-pentakis(methylenphosphonsäure) verwendet wird.

5. Verfahren nach den Ansprüchen 6 und/oder 7, **dadurch gekennzeichnet, dass** die Behandlung als Kesseldruckimprägnierung durchgeführt wird und dabei Lösungen oder Dispersionen der genannten Salze von halogenfreien organischen Phosphonsäuren in Wasser oder wasserhaltigen Lösungsmitteln eingesetzt werden.

6. Verwendung von flammwidrigen Holzwerkstoffen nach Ansprüchen 1 und/oder 2 oder von nach dem Verfahren der Ansprüche 3 bis 5 ausgerüsteten Holzwerkstoffen als Bauholz, als Material zur Herstellung von Inneneinrichtungen, Möbeln und/oder Innenausstattungen von Transportmitteln, als Ausgangsmaterial für weiter veredelte Holzhalbzeuge und als Füllstoff oder Verstärkungsmaterial in holzhaltigen Kompositmaterialien.

7. Verwendung nach Anspruch 6, **dadurch gekennzeichnet, dass** es sich bei den Holzwerkstoffen um Holzpartikel handelt und diese als Füllstoff oder Verstärkungsmaterial in holzhaltigen Kompositmaterial, bevorzugt in Holz-Kunststoff-Kompositen oder mineralische gebundenen Baumaterialien eingesetzt werden.

## Claims

1. Flame-retardant timber materials comprising as water-soluble flame retardants salts of halogen-free organic phosphonic acids, **characterized in that** the salts involve those of the formula (I) 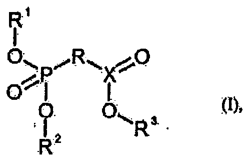 in which
R is a divalent, straight-chain, branched or cyclic C₁- to C₁₀-hydrocarbon moiety optionally comprising up to three nitrogen atoms and optionally substituted with up to four hydroxyl groups,
R¹, R² and R³ are mutually independently H or NR⁴R⁵R⁶R⁷, where at least one of the moieties R¹, R² and R³ is not H,
X is C, S=O, or P-O-R¹ and
R⁹, R⁵, R⁶ and R⁷ are mutually independently H, straight-chain or branched C₁- to C₁₈-alkyl, C₂- to C₄-hydroxyalkyl or benzyl.

2. Timber materials according to Claim 1, **characterized in that** they comprise as salts of halogen-free organic phosphonic acids at least one NH₄ salt of hydroxyphosphonoacetic acid, of hydroxy-ethanediphosphonic acid, of 2-phosphonobutane-1,2,4-tricarboxylic acid, of nitrilotrismethylene-tris(phosphonic acid) or of diethylenetriamine-pentakis(methylenephosphonic acid).

3. Process for the flame-retardant modification of timber materials via treatment of cut-to-size timber segments, of timber particles or of semi-finished timber products with salts of halogen-free organic phosphonic acids as water-soluble flame retardants **characterized in that** the salts correspond to the formula (I) 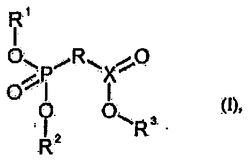 in which
R is a divalent, straight-chain, branched or cyclic C₁- to C₁₀-hydrocarbon moiety optionally comprising up to three nitrogen atoms and optionally substituted with up to four hydroxyl groups,
R¹, R² and R³ are mutually independently H or NR⁴R⁵R⁶R⁷, where at least one of the moieties R¹, R² and R³ is not H,
X is C, S=O, or P-O-R¹ and
R⁹, R⁵, R⁶ and R⁷ are mutually independently H, straight-chain or branched C₁- to C₁₈-alkyl, C₂- to C₄-hydroxyalkyl or benzyl.

4. Process according to Claim 3, **characterized in that** the treatment uses at least one water-soluble NH₄ salt of hydroxyphosphonoacetic acid, of hydroxy-ethanediphosphonic acid, of 2-phosphonobutane-1,2,4-tricarboxylic acid, of nitrilotrismethylene-tris(phosphonic acid) or of diethylenetriamine-pentakis(methylenephosphonic acid).

5. Process according to Claim 3 and/or 4, **characterized in that** the treatment takes the form of impregnation in a pressure vessel and solutions or dispersions of the specified salts of halogen-free organic phosphonic acids in water or in aqueous solvents are used here.

6. Use of flame-retardant timber materials according to Claim 1 and/or 2 or of timber materials modified in accordance with the process of Claims 3 to 5 as construction timber, as material for the production of interior equipment, of furniture and/or of interior fittings of means of transport, as starting material for semi-finished timber products subjected to further finishing and as filler or reinforcement material in timber-containing composite materials.

7. Use according to Claim 6, **characterized in that** the timber materials involve timber particles and these are used as filler or reinforcement material in timber-containing composite material, preferably in timber-plastics composites or in mineral-bound construction materials.

## Revendications

1. Matériaux à base de bois ignifuges, contenant en tant qu'agents ignifuges solubles dans l'eau des sels d'acides phosphoniques organiques non halogénés, **caractérisés en ce que** les sels sont de formule (I) 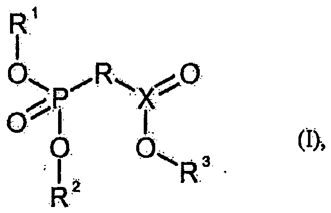 dans laquelle
R représente un radical hydrocarboné en C₁ à C₁₀ bivalent, linéaire, ramifié ou cyclique, contenant éventuellement jusqu'à trois atomes d'azote, éventuellement substitué avec jusqu'à quatre groupes hydroxyle,
R¹, R² et R³ représentent indépendamment les uns des autres H ou NR⁴R⁵R⁶R⁷, au moins un des radicaux R¹, R² et R³ étant différent de H,
X représente C, S=O ou P-O-R¹ et
R⁴, R⁵, R⁶ et R⁷ représentent indépendamment les uns des autres H, alkyle en C₁ à C₁₈ linéaire ou ramifié, hydroxyalkyle en C₂ à C₄ ou benzyle.

2. Matériaux à base de bois selon la revendication 1, **caractérisés en ce qu'**ils contiennent en tant que sels d'acides phosphoniques organiques non halogénés au moins un sel de NH₄ de l'acide hydroxyphosphonoacétique, de l'acide hydroxyéthanediphosphonique, de l'acide 2-phosphonobutane-1,2,4-tricarboxylique, de l'acide nitrilotrisméthylènetris(phosphonique) ou de l'acide diéthylènetriamine-pentakis(méthylène-phosphonique).

3. Procédé d'ignifugation de matériaux à base de bois par traitement de découpes de bois, de particules de bois ou de produits semi-finis en bois avec des sels d'acides phosphoniques organiques non halogénés en tant qu'agents ignifuges solubles dans l'eau, **caractérisé en ce que** les sels correspondent à la formule (I) 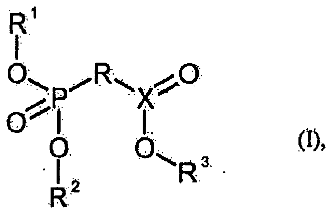 dans laquelle
R représente un radical hydrocarboné en C₁ à C₁₀ bivalent, linéaire, ramifié ou cyclique, contenant éventuellement jusqu'à trois atomes d'azote, éventuellement substitué avec jusqu'à quatre groupes hydroxyle,
R¹, R² et R³ représentent indépendamment les uns des autres H ou NR⁴R⁵R⁶R⁷, au moins un des radicaux R¹, R² et R³ étant différent de H,
X représente C, S=O ou P-O-R¹ et
R⁴, R⁵, R⁶ et R⁷ représentent indépendamment les uns des autres H, alkyle en C₁ à C₁₈ linéaire ou ramifié, hydroxyalkyle en C₂ à C₄ ou benzyle.

4. Procédé selon la revendication 3, **caractérisé en ce que**, lors du traitement, au moins un sel de NH₄ soluble dans l'eau de l'acide hydroxyphosphonoacétique, de l'acide hydroxyéthanediphosphonique, de l'acide 2-phosphonobutane-1,2,4-tricarboxylique, de l'acide nitrilotrisméthylènetris(phosphonique) ou de l'acide diéthylènetriamine-pentakis(méthylène-phosphonique) est utilisé.

5. Procédé selon les revendications 3 et/ou 4, **caractérisé en ce que** le traitement est réalisé sous la forme d'une imprégnation en autoclave et des solutions ou dispersions des sels mentionnés d'acides phosphoniques organiques non halogénés dans de l'eau ou des solvants contenant de l'eau sont utilisées.

6. Utilisation de matériaux à base de bois ignifuges selon les revendications 1 et/ou 2 ou de matériaux à base de bois traités par le procédé selon les revendications 3 à 5 en tant que bois de construction, en tant que matériau pour la fabrication d'aménagements intérieurs, de meubles et/ou d'équipements intérieurs pour moyens de transport, en tant que matière première pour produits semi-finis en bois davantage transformés et en tant que charge ou matériau de renforcement dans des matériaux composites contenant du bois.

7. Utilisation selon la revendication 6, **caractérisée en ce que** les matériaux à base de bois sont des particules de bois et celles-ci sont utilisées en tant que charge ou matériau de renforcement dans des matériaux composites contenant du bois, de préférence dans des composites bois-plastique ou des matériaux de construction minéraux liés.
